(19) Europäisches Patentamt
European Patent Office
Office européen des brevets

(11) Veröffentlichungsnummer: **0 140 037 B1**

(12) # EUROPÄISCHE PATENTSCHRIFT

(45) Veröffentlichungstag der Patentschrift: **01.06.88**

(51) Int. Cl.⁴: **C 08 L 69/00**, C 08 L 55/02, C 08 L 25/12, C 08 L 33/18, C 08 K 5/07

(21) Anmeldenummer: **84110473.0**

(22) Anmeldetag: **04.09.84**

(54) **ABS-Polycarbonat-Mischungen mit verbesserter Flammwidrigkeit.**

(30) Priorität: **17.09.83 DE 3333721**

(43) Veröffentlichungstag der Anmeldung: **08.05.85 Patentblatt 85/19**

(45) Bekanntmachung des Hinweises auf die Patenterteilung: **01.06.88 Patentblatt 88/22**

(84) Benannte Vertragsstaaten: **DE FR GB IT NL**

(56) Entgegenhaltungen:
**BE - A - 724 795**
**US - A - 3 954 905**

(73) Patentinhaber: **BAYER AG, Konzernverwaltung RP Patentabteilung, D-5090 Leverkusen 1 Bayerwerk (DE)**

(72) Erfinder: **Bauer, Wolfgang, Dr., Bethelstrasse 14, D-4150 Krefeld (DE)**
Erfinder: **Lindner, Christian, Dr., Riehler Strasse 200, D-5000 Köln 60 (DE)**
Erfinder: **Müller, Friedemann, Dr., Am Steinacker 5, D-4040 Neuss 21 (DE)**
Erfinder: **Kress, Hans-Jürgen, Dr., Scheiblerstrasse 111, D-4150 Krefeld 1 (DE)**
Erfinder: **Zabrocki, Karl, Dr., Edelfalter 33, D-4044 Büttgen (DE)**
Erfinder: **Buekers, Josef, Kneinstrasse 58 A, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 140 037 B1

ACTORUM AG

**Beschreibung**

Die Erfindung betrifft ABS-Polycarbonat-Mischungen (PC-ABS) auf Basis spezieller Copolymerisate und Pfropfcopolymerisate aus ungesättigten Monomeren und zur Copolymerisation befähigten Acetylacetatderivaten, die in ihrer Flammwidrigkeit gegenüber bekanntem PC-ABS verbessert sind. PC-ABS besteht üblicherweise aus

A) mindestens einem aromatischen Polycarbonat,

B) mindestens einem Pfropfpolymerisat mit kautschuckartiger Pfropfgrundlage und

C) gegebenenfalls mindestens einem thermoplastischen Copolymerisat aus Styrol und (Meth)Acrylnitril, in dem das Styrol ganz oder teilweise durch α-Methylstyrol, kernsubstituierte Styrole, Methylmethacrylat, Maleinsäureanhydrid oder substituiertes oder unsubstituiertes Maleinimid ersetzt sein kann.

PC-ABS ist ein wertvolles Ausgangsmaterial zur Herstellung von Formteilen. Ein Nachteil dieses Materials ist seine ungenügende Flammwidrigkeit, die seine Anwendung für feuergefährdete, insbesondere thermisch beanspruchte Teile, z.B. für Phono- und Fernsehgeräte stark einschränkt. Zur Erhöhung der Flammwidrigkeit von PC-ABS kann man anorganische Oxide, z.B. $Sb_2O_3$, oder halogenhaltige Additive, z.B. Octabromdiphenylether verwenden. Diese Additive sind jedoch erst bei Anteilen zwischen 10 und 30 Gew.-% wirksam, wodurch die mechanische Festigkeit des Teils stark beeinträchtigt wird.

Es wurde nun gefunden, daß man die Entflammbarkeit von PC-ABS durch Copolymerisation mit speziellen Monomeren wesentlich reduzieren kann. Durch diese Maßnahme kann ganz oder teilweise auf den Zusatz flammhemmender Additive verzichtet werden.

Gegenstand der vorliegenden Erfindung ist somit PC-ABS, das aus

A) 10–90 Gew.-% eines aromatischen Polycarbonats

B) 10–50 Gew.-% eines Pfropfpolymerisats, aus 5 bis 90 Gew.-% einer Mischung aus

a) 50 bis 90 Gew.-% Styrol, α-Methylstyrol, kernsubstituiertem Styrol oder Methylmethacrylat oder Mischungen daraus,

b) 10–50 Gew.-% (Meth)Acrylnitril und

c) 0–20 Gew.-% mindestens einer weiteren copolymerisierbaren Verbindung auf

95–10 Gew.-% eines Kautschuks mit einer Glastemperatur $T_g \leq 0°C$,

C) 80–0 Gew.-% eines Copolymerisats aus

a) 50–90 Gew.-% Styrol, α-Methylstyrol, kernsubstituiertem Styrol oder Methylmethacrylat oder Mischungen daraus,

b) 90–50 Gew.-% (Meth)Acrylnitril und

c) 0,2–20 Gew.-% einer weiteren copolymerisierbaren Verbindung und

D) weiteren üblichen Additiven besteht, wobei sich die Gew.-%-Angaben zu A, B und C auf die Summe von A, B und C beziehen, und dadurch gekennzeichnet ist, daß die weiteren copolymerisierbaren Verbindungen Bc) und Cc) einer der Formeln

$$CH_3{-}CO{-}CH_2{-}CO{-}OR_1{-}OOC{-}\underset{}{\overset{R_2}{\overset{|}{C}}} = CH_2 \quad \text{oder}$$

$$CH_3{-}CO{-}CH_2{-}CO{-}OR_3{-}\overset{R_4}{\overset{|}{C}} = CH_2$$

entsprechen, worin

$R_1$ $C_2$–$C_6$-Alkylen,

$R_2$ Wasserstoff oder Methyl,

$R_3$ eine direkte Bindung oder $C_1$–$C_4$-Alkylen und

$R_4$ Wasserstoff, Methyl oder $CH_2{-}OOC{-}CH_2{-}CO{-}CH_3$

bedeuten, und die Gesamtmenge an Bc) und Cc) 0,2 bis 25 Gew.-% bezogen auf PC-ABS, beträgt.

Alle aromatischen Polycarbonate sind geeignet. Besonders geeignete Polycarbonate sind solche aus Dihydroxydiarylalkanen. Bevorzugte Dihydroxydiarylalkane sind 4,4'-Dihydroxydiphenylpropan-2,2 (Bisphenol A), Tetramethylbisphenol A, Tetrachlorbisphenol A, Tetrabrombisphenol A und Bis-(4-hydroxyphenyl)-p-diisopropylbenzol.

Auch verzweigte Polycarbonate sind geeignet. Zu ihrer Herstellung wird ein Teil der Dihydroxyverbindung, z.B. 0,2 bis 2 Mol-%, durch eine Polyhydroxyverbindung ersetzt. Geeignete Polyhydroxyverbindungen sind z.B. Phloroglucin, 4,6-Dimethyl-2,4,6-tri-(4-hydroxyphenyl)-hepten-2; 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan und 2,2-Bis-4,4-(4,4'-dihydroxydiphenyl)-cyclohexylpropan.

Solche Polycarbonate sind in den US-A-3 028 365, 2 999 835, 3 148 172, 3 271 368, 2 970 137, 2 991 273, 3 271 367, 3 280 078, 3 014 891 und 2 999 846 beschrieben. Bevorzugt haben die Polycarbonate Molekulargewichte von 10.000 bis 200.000 (Gewichtsmittel), insbesondere 20.000 bis 40.000, ermittelt über die relative Viskosität in Methylenchlorid bei 25°C.

Die Verbindungen Bc) bzw. Cc) sind bekannt und werden z.B. durch Umsetzung entsprechender OH-Verbindungen mit Diketen oder durch Umesterung von Acetylacetaten mit entsprechenden OH-Verbindungen hergestellt.

Bevorzugte Verbindungen Bc) bzw. Cc) sind Umsetzungsprodukte des Diketens mit OH-haltigen Acrylestern, z.B. mit Hydroxyethylacrylat, Hydroxypropylacrylat, Hydroxyethylmethacrylat und Hydroxypropylmethacrylat.

Bevorzugt werden 60 bis 75% Ba) bzw. Ca), 32 bis 20% Bb) bzw. Cb) und 15 bis 3% Bc) bzw. Cc) copolymerisiert.

Geeignete kernsubstituierte Styrole Ba) und Ca) sind z.B. durch $C_1$–$C_4$-Alkyl, Chlor oder Brom substituiertes Styrol.

Bevorzugte Verbindungen Ba) und Ca) sind Styrol, α-Methylstyrol und p-Methylstyrol.

Höhere Anteile von Bc) plus Cc) als 25% führen in der Regel zu einem Abfall der Produktzähigkeit, während niedrigere Anteile als 0,2% für den Flammschutz unwirksam sind.

Als Kautschukpolymere kommen z.B. Polybutadien, SBR, NBR, Polybutylacrylat und EPDM in Frage.

Das Gewichtsverhältnis der polymerisierten Monomeren zum Kautschuk im Pfropfpolymerisat B liegt bei 5:95 bis 90:10, vorzugsweise 60:40 bis 30:70.

Für die Herstellung der Harzpolymerisate C wie auch der Propfpolymerisate B kommen alle üblichen Polymerisationstechniken wie Massepolymerisation, Lösungspolymerisation oder Emulsionspolymerisation in Betracht (Ullmanns Encyclopädie der technischen Chemie, Band 19, Seite 277 bis 295; Verlag Chemie, Weinheim 1980).

Bevorzugt sind die Massepolymerisation und die Emulsionspolymerisation.

Die Harze C sind im allgemeinen in organischen Lösemitteln gut löslich und besitzen durchschnittliche Molegewichte von $6 \cdot 10^3$ bis $10^6$, vorzugsweise $10^4$ bis $2 \cdot 10^5$ (Zahlenmittel).

Die Pfropfpolymerisate B sind nur teilweise löslich. Sie weisen bevorzugt Pfropfgrade G gemäss der in der DE-AS 2 420 358 gegebenen Definition von 0,3 bis 1,0 auf.

Die Abmischung der Polycarbonate A mit den Pfropfpolymerisaten B und den Harzen C kann entweder im «nassen» Zustand, d.h. als Lösung, Aufschlämmung oder Emulsion oder im «trockenen» Zustand, d.h. als Pulver, Granulat oder Schmelze erfolgen, wobei sich im letzteren Fall eine für Thermoplaste übliche Durchmischung in Knetern, Schneckenmaschinen, Walzenstühlen oder anderen für die Thermoplastverarbeitung üblichen Maschinen anschließt.

Übliche Additive, wie Stabilisatoren, Gleitmittel, Antistatika, Füllstoffe und Pigmente können zugesetzt werden.

Die Verarbeitung der Formmassen geschieht z.B. durch Granulierung, Spritzguß, Extrusion, Kalandrierung, Pressung oder Blasverformung.

Die erfindungsgemäßen PC-ABS-Mischungen zeichnen sich durch wesentlich verbesserte Flammwidrigkeit bei gleichzeitig guten mechanischen Eigenschaften und guter Wärmeformbeständigkeit aus.

Herstellung der Harzpolymerisate

In einer Vorlage aus 100 kg Wasser und 0,25 kg eines Alkylsulfonats als Emulgator gab man nach sorgfältigem Spülen mit Stickstoff bei 65°C eine Lösung von 0,5 kg $K_2S_2O_8$ in Wasser, sowie 5 kg des Monomergemisches. Nach Anspringen der Polymerisation wurde über 4 Stunden bei 65–70°C der Rest des Monomergemisches sowie eine wäßrige Lösung von 4 kg des Emulgators dosiert; das gesamte Monomergemisch umfaßte 100 kg. Anschließend wurde weitere 4 Stunden bei 65–70°C gerührt.

Als Komponente Cc) wurde die Verbindung der Formel

$$H_2C=\underset{\displaystyle CH_3}{\underset{|}{C}}-COOCH_2-CH_2-O-\overset{\displaystyle O}{\overset{\|}{C}}-CH_2-\overset{\displaystyle O}{\overset{\|}{C}}-CH^3$$

eingesetzt.

Tabelle 1

| Harzpolymer | Zusammensetzung Monomermischung Styrol, α-Methyl-styrol* | Acryl-nitril | Cc | t-DDM** (kg) |
|---|---|---|---|---|
| I | 62 | 28 | 10 | 0,4 |
| II | 67 | 28 | 5 | 0,4 |
| III | 69,5 | 28 | 2,5 | 0,4 |
| IV | 72 | 18 | 10 | 0,4 |
| V | 59* | 31 | 10 | 0,4 |
| VI (Vergleich) | 72 | 28 | – | 0,4 |
| VII (Vergleich) | 69* | 31 | – | 0,4 |

** tert.-Dodecylmercaptan als Regler

Herstellung der Pfropfpolymerisate

In eine Vorlage gab man einen Polybutadienlatex mit 50 kg Feststoff und einem mittleren Teilchendurchmesser von 0,4 µm, verdünnte auf 20% Feststoff, heizte unter Spülen mit $N_2$ auf 65°C auf, gab 0,5 kg $K_2S_2O_8$ in Wasser gelöst zu, dosierte anschließend über 4 Stunden 50 kg Monomergemisch sowie eine alkalisch eingestellte Lösung von 2,0 kg Alkylsulfonat-Emulgator. Man ließ weitere 4 Stunden bei 65–70°C reagieren. Die Komponente Cc) war die gleiche wie die Komponente Bc) bei der Herstellung des Harzes.

Tabelle 2

| Propfpolymere | Zusammensetzung des Monomergemisches Styrol | Acrylnitril | Cc) |
|---|---|---|---|
| VIII | 36 | 14 | – |
| IX | 32,4 | 12,6 | 5,0 |
| X | 30,6 | 11,9 | 7,5 |

Die Harze (kg) und Pfropfpolymerisate (kg) wurden nach Zugabe eines Stabilisators separat durch Salzzusatz gefällt, gewaschen, getrocknet und auf einem Zweiwellenextruder mit einem Polycarbonat (kg) aus Tetrabrombisphenol A und Bisphenol A im Gewichtsverhältnis 1:9; Lösungsviskosität $\eta_{rel}$ ($CH_2Cl_2$, 25°C) = 1,284, abgemischt.

Tabelle 3

| Beispiel | Polycarbonat (Menge) | Harzpolymer (Menge/Art) | Pfropfpolymer (Menge/Art) | Antimontrioxid (kg) | $O_2$-Index* |
|---|---|---|---|---|---|
| 1 | 70 | 16,8/I | 11,2/VIII | 2 | 34 |
| 2 | 70 | 16,8/IV | 11,2/VIII | 2 | 33 |
| 3 (Vergleich) | 70 | 16,8/VI | 11,2/VIII | 2 | 28 |

| Beispiel | Polycarbonat (Menge) | Harzpolymer (Menge/Art) | Pfropfpolymer (Menge/Art) | Antimontrioxid (kg) | $O_2$-Index* |
|---|---|---|---|---|---|
| 4 | 70 | 16,8/VI | 11,2/X | 2 | 31 |
| 5 | 70 | 16,8/I | 11,2/X | 2 | 35 |
| 6 | 70 | 16,8/V | 11,2/VIII | 2 | 33 |
| 7 (Vergleich) | 70 | 16,8/VII | 11,2/VIII | 2 | 29 |

* ASTM, D 2863–70

**Patentansprüche**

1. ABS-Polycarbonat-Mischungen bestehend aus

A) 10–90 Gew.-% eines aromatischen Polycarbonats

B) 10–50 Gew.-% eines Pfropfpolymerisats, aus 5 bis 90 Gew.-% einer Mischung aus

a) 50 bis 90 Gew.-% Styrol, α-Methylstyrol, kernsubstituiertem Styrol oder Methylmethacrylat oder Mischungen daraus,

b) 10–50 Gew.-% (Meth)Acrylnitril und

c) 0–20 Gew.-% mindestens einer weiteren copolymerisierbaren Verbindung auf 95–10 Gew.-% eines Kautschuks mit einer Glastemperatur $T_G \leq 0\,°C$,

C) 80–0 Gew.-% eines Copolymerisats aus

a) 50–90 Gew.-% Styrol, α-Methylstyrol, kernsubstituiertem Styrol oder Methylmethacrylat oder Mischungen daraus,

b) 90–50 Gew.-% (Meth)Acrylnitril und

c) 0,2–20 Gew.-% einer weiteren copolymerisierbaren Verbindung und

D) weiteren üblichen Additiven, wobei sich die Gew.-%-Angaben zu A, B und C auf die Summe von A, B und C beziehen, dadurch gekennzeichnet, daß die weiteren copolymerisierbaren Verbindungen Bc) und Cc) einer der Formeln

$$CH_3–CO–CH_2–CO–OR_1–OOC–C(R_2) = CH_2 \quad \text{oder}$$

$$CH_3–CO–CH_2–CO–OR_3–C(R_4) = CH_2$$

entsprechen, worin

$R_1$ $C_2$–$C_6$-Alkylen,

$R_2$ Wasserstoff oder Methyl,

$R_3$ eine direkte Bindung oder $C_1$–$C_4$-Alkylen und

$R_4$ Wasserstoff, Methyl oder $CH_2–OOC–CH_2–CO–CH_3$

bedeuten, und die Gesamtmenge an Bc) und Cc) 0,2–25 Gew.-%, bezogen auf PC-ABS, beträgt.

2. PC-ABS-Formmassen gemäß Anspruch 1, dadurch gekennzeichnet, daß das Copolymerisat aus 60–75 Gew.-% Ca), 32–20 Gew.-% Cb) und 15–3 Gew.-% Cc besteht.

3. PC-ABS-Formmassen gemäß Anspruch 1, dadurch gekennzeichnet, daß zur Herstellung des Pfropfpolymerisats eine Mischung aus 60–75 Gew.-% Ba), 32–20 Gew.-% Bb) und 15–3 Gew.-% Bc) verwendet wird.

4. PC-ABS-Formmassen gemäß Anspruch 1, dadurch gekennzeichnet, daß als Verbindung Bc) oder Cc) ein Umsetzungsprodukt aus Diketen und Hydroxyethyl(meth)acrylat oder Hydroxypropyl(meth)-acrylat verwendet wird.

5. PC-ABS-Formmassen gemäß Anspruch 1, dadurch gekennzeichnet, daß das Gewichtsverhältnis der polymerisierten Monomeren zum Kautschuk im Pfropfpolymerisat B 60:40 bis 30:70 beträgt.

**Claims**

1. ABS polycarbonate mixtures consisting of

A) 10 to 90% by weight of an aromatic polycarbonate,

B) 10 to 50% by weight of a graft polymer of 5 to 90% by weight of a mixture of

a) 50 to 90% by weight of styrene, α-methyl styrene, nuclear substituted styrene or methyl methacrylate or mixtures thereof,

b) 10 to 50% by weight of (meth)acrylonitrile and

c) 0 to 20% by weight of at least one other copolymerisable compound

on 95 to 10% by weight of a rubber having a glass transition temperature $T_G \leq 0\,°C$,

C) 80 to 0% by weight of a copolymer of

a) 50 to 90% by weight of styrene, α-methyl styrene, nuclear substituted styrene or methyl methacrylate or mixtures thereof,

b) 90 to 50% by weight of (meth)acrylonitrile and

c) 0·2 to 20% by weight of another copolymerisable compound and

D) Other conventional additives, the given percentages by weight of A, B and C being based on the sum of A, B and C, characterised in that the other copolymerisable compounds B c) and C c) correspond to one of the following formulae:

$$CH_3–CO–CH_2–CO–OR_1–OOC–C(R_2) = CH_2 \quad \text{or}$$

$$CH_3–CO–CH_2–CO–OR_3–C(R_4) = CH_2$$

wherein

$R_1$ denotes $C_2$–$C_6$ alkylene,

$R_2$ denotes hydrogen or methyl,

$R_3$ denotes a direct bond or a $C_1$–$C_4$ alkylene group and

$R_4$ denotes hydrogen, methyl or $CH_2–OOC–CH_2–CO–CH_3$

and the total quantity of B c) and C c) amounts to 0·2 to 25% by weight based on PC-ABS.

2. PC-ABS moulding compounds according to Claim 1, characterised in that the copolymer consists of 60 to 75% by weight of C a), 32 to 20% by weight of C b) and 15 to 3% by weight of C c).

3. PC-ABS moulding compounds according to Claim 1, characterised in that a mixture of 60 to 75% by weight of B a), 32 to 20% by weight of B b) and 15 to 3% by weight of B c) is used for the preparation of the graft polymer.

4. PC-ABS moulding compounds according to Claim 1, characterised in that a reaction product of a diketene and hydroxy ethyl (meth)acrylate or hydroxy propyl (meth)acrylate is used as compound B c) or C c).

5. PC-ABS moulding compounds according to Claim 1, characterised in that the ratio by weight of the polymerised monomers to the rubber in the graft polymer B is from 60:40 to 30:70.

## Revendications

1. Mélanges ABS-polycarbonates consistant en

A) 10–90% en poids d'un polycarbonate aromatique,

B) 10–50% en poids d'un polymère greffé de 5 à 90% en poids d'un mélange de

a) 50 à 90% en poids de styrène, d'α-méthylstyrène, de styrène substitué au noyau ou de méthacrylate de méthyle ou de leurs mélanges,

b) 10–50% en poids de (méth)acrylonitrile et

c) 0–20% en poids d'au moins un autre composé copolymérisable sur

95–10% en poids d'un caoutchouc ayant une température de transition vitreuse $T_g \leq 0°C$,

C) 80–0% en poids d'un copolymère de

a) 50–90% en poids de styrène, d'α-méthylstyrène, de styrène substitué au noyau ou de méthacrylate de méthyle ou de leurs mélanges,

b) 90–50% en poids de (méth)acrylonitrile et

c) 0,2–20% en poids d'un autre composé copolymérisable et

D) d'autres additifs habituels, les indications de pourcentages en poids de A, B et C se rapportant à la somme de A, B et C, caractérisé en ce que les autres composés copolymérisables Bc) et Cc) correspondent à l'une des formules

$$CH_3\text{–}CO\text{–}CH_2\text{–}CO\text{–}OR_1\text{–}OOC\text{–}\overset{\overset{\displaystyle R_2}{|}}{C} = CH_2 \quad \text{ou}$$

$$CH_3\text{–}CO\text{–}CH_2\text{–}CO\text{–}OR_3\text{–}\overset{\overset{\displaystyle R_4}{|}}{C} = CH_2$$

dans lesquelles

$R_1$ représente un alkylène en $C_2$–$C_6$,

$R_2$ représente l'hydrogène ou un méthyle,

$R_3$ représente une liaison directe ou un alkylène en $C_1$–$C_4$ et

$R_4$ représente l'hydrogène, un méthyle ou $CH_2$–$OOC$–$CH_2$–$CO$–$CH_3$, et la quantité totale de Bc) et Cc) est de 0,2 à 25% en poids par rapport au PC-ABS.

2. Matières à mouler PC-ABS selon la revendication 1, caractérisées en ce que le copolymère consiste en 60–75% en poids de Ca), 32–20% en poids de Cb) et 15–3% en poids de Cc).

3. Matières à mouler PC-ABS selon la revendication 1, caractérisées en ce que l'on utilise pour la préparation du polymère greffé un mélange de 60–75% en poids de Ba), 32–20% en poids de Bb) et 15–3% de Bc).

4. Matières à mouler PC-ABS selon la revendication 1, caractérisées en ce que l'on utilise comme composé Bc) ou Cc) un produit de réaction du dicétène et de (méth)acrylate d'hydroxyéthyle ou de (méth)acrylate d'hydroxypropyle.

5. Matières à mouler PC-ABS selon la revendication 1, caractérisées en ce que le rapport des monomères polymérisés au caoutchouc dans le polymère greffé B est de 60:40 à 30:70 en poids.